# EUROPÄISCHE PATENTANMELDUNG

(11) **EP 1 733 960 A2**
(43) Veröffentlichungstag der Anmeldung: **20.12.2006**
(21) Anmeldenummer: 06009492.7
(22) Anmeldetag: 09.05.2006
(51) Int. Cl.: B62M 3/00

(54) **Tretlagereinheit**

(30) Priorität: 15.06.2005 DE 102005027520
(71) Anmelder: Schaeffler KG, 91074 Herzogenaurach (DE)
(72) Erfinder: Sperber, Matthias, 96193 Wachenroth (DE)

(57) **Zusammenfassung**

Die Erfindung betrifft eine Tretlagereinheit, insbesondere für Fahrräder, bestehend aus einer mit Tretkurbeln (4, 5) verbundenen Tretlagerachse (3), die über zwei voneinander beabstandete Wälzlager drehbar in einem mit einem Rahmen (1) verbundenen Tretlagergehäuse (2) aufgenommen ist.

Die Tretlagereinheit zeichnet sich dadurch aus, dass die Wälzlager als Axial-Schrägnadellager (8, 9) ausgebildet sind, deren Lagernadeln (8.5, 9.5) Drehachsen (8.7, 9.7) aufweisen, die unter einem Winkel (α) geneigt zu einer Lagerachse (12) auf zugehörigen Laufbahnen zwischen zwei planparallelen, insbesondere aus Blech gebildeten Laufscheiben (8.1, 8.2, 9.1, 9.2) abwälzen, wobei die Axial-Schrägnadellager (8, 9) über konische Anlageflächen (2.1, 10.1, 11.1) gegeneinander verspannbar sind.

Eine solche Tretlagereinheit ist in einfacher Weise aufgebaut und lässt sich auch durch Laien montieren und demontieren.

## Beschreibung

### Anwendungsgebiet der Erfindung

Die Erfindung betrifft eine Tretlagereinheit, insbesondere für Fahrräder, bestehend aus einer mit Tretkurbeln verbunden Tretlagerachse, die über zwei voneinander beabstandete Wälzlager drehbar in einem mit einem Rahmen verbunden Tretlagergehäuse aufgenommen ist.

### Hintergrund der Erfindung

Aus der DE 82 30 552 U1 ist beispielsweise eine derartige Tretlagereinheit bekannt geworden, bei der die Lager in einer in die Muffe des Fahrradrahmens einsetzbaren Buchse angeordnet sind und die Buchse zur axialen und radialen Festlegung in die Muffe des Rahmens eingeschraubt ist. Die Lager sind als Rillenkugellager ausgebildet, wobei mindestens eine der Kugellaufbahnen in der Buchse verläuft. Eine derartige Tretlagereinheit wird als Ganzes in die Rahmenmuffe eingespannt.

Aus der DE 298 11 216 U1 ist eine weitere Tretlageranordnung bekannt. Bei dieser Anordnung sind zwei Schraubkappen jeweils ineinander gegenüberliegende Innengewinde des Lagergehäuses des Tretlagers eingeschraubt. Eine Hülse befindet sich innerhalb des Lagergehäuses. Zwei Kugellager wiederum sind jeweils innerhalb des Lagergehäuses zwischen den Schraubkappen sowie der Hülse montiert. Die Tretlagerwelle durchgreift die Schraubkappen sowie die Hülse und wird drehbar an den Kugellagern gehalten.

Eine zusammengesetzte Lageranordnung, die aus einem Rillenkugellager und einem Nadellager besteht, ist aus der DE 44 30 564 A1 bekannt geworden. Die Tretlagerachse ist über zwei voneinander beabstandete Nadellager gehalten, die hauptsächlich Radialkräfte aufnehmen, während die Axialkräfte durch ein zusätzliches Kugellager aufgenommen werden, das neben dem einen Nadellager angeordnet ist. Die Nadellager sind wiederum von einer Lagerhülse aufgenommen, die an ihren Enden von Dichthülsen umschlossen ist, die wiederum beidseitig von Gewindehülsen aufgenommen sind, die mit ihrem Außengewinde in ein Innengewinde des Fahrradrahmens einschraubbar sind.

Weitere gattungsgemäß ausgebildete Tretlagereinheiten sind in nachstehenden Vorveröffentlichungen ausführlich beschrieben:

DE 30 15 353 A1, DE 30 24 546 A1, DE 30 34 116 A1, DE 33 05 447 A1, DE 34 34 314 A1, DE 36 41 647 A1, DE 85 18 158 U1, DE 87 08 234 U1, DE 92 07 650 U1

Die nach dem bekannten Stand der Technik ausgebildeten Tretlagereinheiten weisen zum einen eine relativ geringe Tragfähigkeit auf und eine relativ geringe Steifheit in axialer Richtung und sind zum anderen sehr kompliziert zusammengesetzt. Dies hat zur Folge, dass die Montage sehr aufwendig ist und von wenig geübten Personen auch nicht vorgenommen werden kann. Ein weiterer Nachteil liegt darin, dass insbesondere die Spielfreiheit nach längerer Gebrauchsdauer nicht mehr gegeben ist.

### Zusammenfassung der Erfindung

Ausgehend von den Nachteilen des bekannten Standes der Technik liegt der Erfindung daher die Aufgabe zugrunde, eine Tretlagereinheit für Fahrräder bereitzustellen, die einerseits einfach aufgebaut ist und die andererseits sowohl Kräfte in axialer als auch in radialer Richtung problemlos aufnehmen kann.

Erfindungsgemäß wird diese Aufgabe nach dem kennzeichnenden Teil von Anspruch 1 in Verbindung mit dessen Oberbegriff dadurch gelöst, dass die Wälzlager als Axial- Schrägnadellager ausgebildet sind, deren Lagernadeln Drehachsen aufweisen, die unter einen Winkel geneigt zu einer Lagerachse auf zugehörigen Laufbahnen zwischen zwei Planparallelen, insbesondere aus Blech gebildeten Laufscheiben abwälzen, wobei die Axial- Schrägnadellager über konische Anlageflächen gegeneinander verspannbar sind.

Der wesentliche Vorteil der erfindungsgemäß eingesetzten Axial- Schrägnadellager liegt darin, dass diese aufgrund ihrer Linienberührung eine hohe radiale und axiale Tragfähigkeit aufweisen und sich radialer und axialer Verschleiß ausgleichen lassen. Ein weiterer Vorteil ist dadurch begründet, dass durch die Einstellbarkeit des Abstandes beider Axial- Schrägnadellager zueinander eine hohe Steifigkeit und Spielfreiheit gegeben ist, die sich positiv auf das gesamte Fahrverhalten des Fahrrades auswirkt. Ein weiterer Vorteil ist durch die einfache Montage und Demontage der erfindungsgemäßen Lageranordnung gegeben, sodass diese auch durch einen Laien ohne Spezialwerkzeug durchgeführt werden kann. Darüber hinaus sind die eingesetzten Axial- Schrägnadellager als kostengünstige Zukaufteile in vielfachen Größenverhältnissen auf dem Markt vorhanden.

Weitere vorteilhafte Ausgestaltungen der Erfindung sind in den Unteransprüchen 2 bis 10 beschrieben.

So geht aus Anspruch 2 hervor, dass die Laufscheiben durch einen spanlosen Formgebungsprozeß hergestellt und einem Härteprozeß unterworfen sind. Dadurch ist es möglich, Laufscheiben in unterschiedlichsten Varianten problemlos herzustellen, die durch ihre hohe Härte auch eine relativ weiche und somit gegebenenfalls leichte Anschlußkonstruktion ermöglichen.

Nach einem weiteren Merkmal der Erfindung nach Anspruch 3 ist vorgesehen, dass die Lagernadeln der Axial- Schrägnadellager in einem Käfig aus Kunststoff geführt sein sollen. Dadurch wird ein besonders ruhiger Lauf der Axial- Schrägnadellager realisiert.

Aus den Ansprüchen 4, 5 und 6 geht eine kostengünstige Abdichtung der Tretlagereinheit hervor. Danach soll die innenliegende Laufscheibe an ihrem äußeren Ende einen in Richtung der außenliegenden Laufscheibe verlaufenden Kragen aufweisen, so dass zwischen beiden eine Spaltdichtung gebildet ist. Die außenliegenden Laufscheibe soll eine das Tretlagergehäuse überragende Verlängerung aufweisen, so dass ein Raum zur Aufnahme eines zusätzlichen Dichtelements gebildet ist, das als ein elastischer O-Ring ausgebildet sein soll.

Nach einem weiteren zusätzlichen Merkmal der Erfindung gemäß Anspruch 7 ist vorgesehen, dass Axial- Schrägnadellager zueinander in X- oder in O-Anordnung angestellt sind. In beiden Fällen werden Axialkräfte in beiden Richtungen jeweils von einem Lager aufgenommen, wobei die O-Anordnung den Vorteil hat, dass die Stützbreite gegenüber der X-Anordnung wesentlich größer ist.

Nach einem weiteren Merkmal der Erfindung gemäß Anspruch 8 soll die Tretlagereinheit so ausgebildet sein, dass die Drehachsen der Lagernadeln einen Öffnungswinkel im Bereich zwischen 60 bis 90 C° einschließen. Mit Hilfe dieses Öffnungswinkels kann dann die Verteilung der Last in radialer und in axialer Richtung eingestellt werden, wobei mit größer werdendem Öffnungswinkel auch größere Axiallasten übertragbar sind.

Nach einem weiteren zusätzlichen Merkmal der Erfindung gemäß Anspruch 8 soll die Tretlagerachse als eine Hohlachse ausgebildet sein, was mit dem Vorteil einer Gewichtsverringerung verbunden ist.

Schließlich geht aus einem letzten Merkmal der Erfindung gemäß Anspruch 10 hervor, dass zwischen dem Axial- Schrägnadellager und einem Zahnkranz ein Distanzring und zwischen dem anderen Axial- Schrägnadellager und der Tretkurbel ein Gewindering angeordnet ist, der mit einem Innengewinde auf einem Außengewinde der Tretlagerachse festlegbar ist. Diese Anordnung sorgt einerseits für die Wahrung der Abstandsverhältnisse innerhalb der Lageranordnung zwischen Axial- Schrägnadellager und Kettenrad und zwischen Axial- Schrägnadellager und Tretkurbel und andererseits für die gewünschte Nachstellung der Lageranordnung zum Ausgleich von radialem und axialem Verschleiß.

Die Erfindung wird an nachstehendem Ausführungsbeispiel näher erläutert.

### Kurze Beschreibung der Zeichnungen

- Figur 1: einen Längsschnitt durch ein erfindungsgemäß ausgebildetes Tretlager und
- Figur 2: eine vergrößerte Darstellung des linksseitig angeordneten Ausschnittes von Figur 1.

### Ausführliche Beschreibung der Zeichnungen

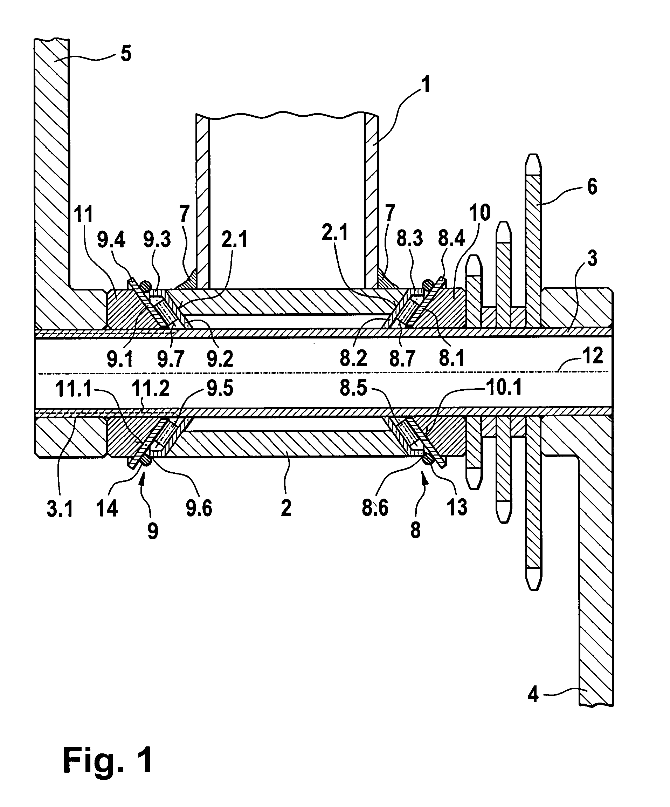

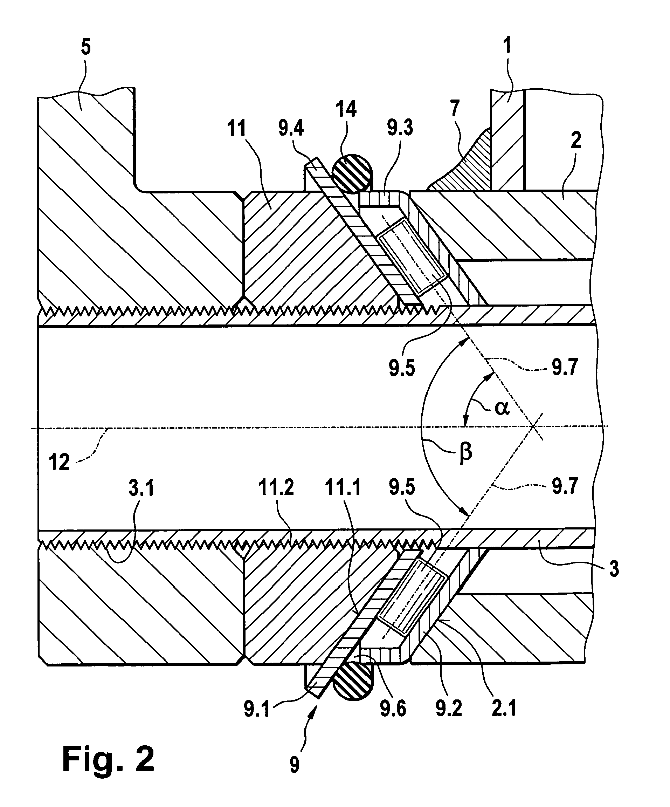

Die in den Figuren 1 und 2 zeichnerisch dargestellte Tretlagereinheit für ein Fahrrad besteht aus der als Hohlachse ausgebildeten Tretlagerachse 3, die beidseitig mit den Tretkurbeln 4 und 5 verbunden ist und vom Tretlagergehäuse 2 aufgenommen ist, das wiederum über die Schweißverbindung 7 mit dem Rahmen 1 verbunden ist. Die drehbare Aufnahme der Tretlagerachse 3 im Gehäuse 2 erfolgt über die zwei voneinander in axialer Richtung beabstandeten Axial- Schrägnadellager 8, 9. Beide weisen Lagernadeln 8.5, 9.5 auf, deren Drehachsen 8.7, 9.7 unter dem Winkel α geneigt zur Lagerachse 12 angeordnet sind, wobei die Lagernadeln 8.5, 9.5, zeichnerisch nicht dargestellt, in einem Käfig angeordnet sein können. Zu jedem Lager 8, 9 gehört eine außen liegende Laufscheibe 8.1, 9.1 und eine innenliegende Laufscheibe 8.2, 9.2, die an konischen Anlageflächen 2.1, 10.1, 11.1 anliegen, welche jeweils vom Tretlagergehäuse 2 und vom Distanzring 10 sowie vom Gewindering 11 gestellt sind. Die innenliegenden Laufscheiben 8.2, 9.2 sind mit dem in Richtung der außenliegenden Laufscheibe 8.1, 9.1 weisenden Kragen 8.3, 9.3 versehen und die außenliegenden Laufscheiben 8.1, 9.1 weisen die Verlängerung 8.4, 9.4 auf, die über das Tretlagergehäuse 2 hinausreicht. Auf diese Weise ist zwischen den beiden Laufscheiben 8.1, 8.2, 9.1, 9.2 jeweils ein Spalt 8.6, 9.6 gebildet, der im Ausführungsbeispiel durch jeweils ein als O-Ring 13, 14 ausgebildetes Dichtelement verschlossen ist. Wie insbesondere die vergrößerte Darstellung in Figur 2 zeigt, wird durch den doppelten Neigungswinkel α gebildeten Öffnungswinkel β die Verteilung der radialen und axialen Kräfte in den Axial- Schrägnadellagern 8, 9 gewährleistet. Je größer der Öffnungswinkel β, umso größer auch die Aufnahmemöglichkeit von axialen Kräften. Die Figuren zeigen weiter, dass ein Einstellen der Lagervorspannung bei sich abzeichnenden Verschleiß in einfacher Weise möglich ist. Dazu braucht lediglich der linksseitig angeordnete Gewindering 11 mittels seines Innengewindes 11.2 auf der Tretlagerachse 3 in axialer Richtung nach rechts verschoben werden, so dass beide Lager 8, 9 zwischen Gehäuse 2, Gewindering 11 und Distanzring 10 fest eingespannt sind. Die Figuren lassen auch erkennen, dass aufgrund der Einfachheit der erfindungsgemäßen Konstruktion eine unkomplizierte Montage und Demontage der Tretlagereinheit auch für den Laien möglich ist.

### Bezugszahlenliste

- 1: Rahmen
- 2: Tretlagergehäuse
- 2.1: Anlagefläche
- 3: Tretlagerachse
- 3.1: Außengewinde
- 4: Tretkurbel
- 5: Tretkurbel
- 6: Kettenrad
- 7: Schweißverbindung
- 8: Axial-Schrägnadellager
- 8.1: Laufscheibe
- 8.2: Laufscheibe
- 8.3: Kragen
- 8.4: Verlängerung
- 8.5: Lagernadel
- 8.6: Spalt
- 8.7: Drehachse
- 9: Axial- Schrägnadellager
- 9.1: Laufscheibe
- 9.2: Laufscheibe
- 9.3: Kragen
- 9.4: Verlängerung
- 9.5: Lagernadel
- 9.6: Spalt
- 9.7: Drehachse
- 10: Distanzring
- 10.1: Anlagefläche
- 11: Gewindering
- 11.1: Anlagefläche
- 11.2: Innengewinde
- 12: Lagerachse
- 13: Dichtelement
- 14: Dichtelement
- α: Neigungswinkel
- β: Öffnungswinkel

## Patentansprüche

1. Tretlagereinheit, insbesondere für Fahrräder, bestehend aus einer mit Tretkurbeln (4, 5) verbundenen Tretlagerachse (3), die über zwei voneinander beabstandete Wälzlager drehbar in einem mit einem Rahmen (1) verbundenen Tretlagergehäuse (2) aufgenommen ist, **dadurch gekennzeichnet, dass** die Wälzlager als Axial-Schrägnadellager (8, 9) ausgebildet sind, deren Lagernadeln (8.5, 9.5) Drehachsen (8.7, 9.7) aufweisen, die unter einem Winkel (α) geneigt zu einer Lagerachse (12) auf zugehörigen Laufbahnen zwischen zwei planparallelen , insbesondere aus Blech gebildeten Laufscheiben (8.1, 8.2, 9.1, 9.2) abwälzen, wobei die Axial-Schrägnadellager (8, 9) über konische Anlageflächen (2.1, 10.1, 11.1) gegeneinander verspannbar sind.

2. Tretlagereinheit nach Anspruch 1, **dadurch gekennzeichnet, dass** die Laufscheiben (8.1, 8.2, 9.1, 9.2) durch einen spanlosen Formgebungsprozeß hergestellt und einem Härteprozeß unterworfen sind.

3. Tretlagereinheit nach Anspruch 1, **dadurch gekennzeichnet, dass** die Lagernadeln (8.5, 9.5) der Axial-Schrägnadellager (8, 9) in einem Käfig aus Kunststoff geführt sind.

4. Tretlagereinheit nach Anspruch 1, **dadurch gekennzeichnet, dass** die innenliegende Laufscheibe (8.2, 9.2) an ihrem äußeren Ende einen in Richtung der außenliegenden Laufscheibe (8.1, 9.1) verlaufenden Kragen (8.3, 9.3) aufweist, so dass zwischen beiden ein Spalt (8.6, 9.6) gebildet ist.

5. Tretlagereinheit nach Anspruch1, **dadurch gekennzeichnet, dass** die außenliegende Laufscheibe (8.1, 9.1) eine das Tretlagergehäuse (2) überragende Verlängerung (8.4, 9.4) aufweist, so dass ein Raum zur Aufnahme eines zusätzlichen Dichtelements gebildet ist.

6. Tretlagereinheit nach Anspruch 5, **dadurch gekennzeichnet, dass** das Dichtelement ein O-Ring (13, 14) ist.

7. Tretlagereinheit nach Anspruch 1, **dadurch gekennzeichnet, dass** die Axial-Schrägnadellager (8, 9) zueinander in X- oder in O-Anordnung angestellt sind.

8. Tretlagereinheit nach Anspruch 1, **dadurch gekennzeichnet, dass** ein von den Drehachsen (8.7, 9.7) der Lagernadeln (8.5, 9.5) gebildeter Öffnungswinkel (β) einen Wert von 60 bis 90° annimmt.

9. Tretlagereinheit nach Anspruch 1, **dadurch gekennzeichnet, dass** die Tretlagerachse (3) als Hohlachse ausgebildet ist.

10. Tretlagereinheit nach Anspruch 1, **dadurch gekennzeichnet, dass** zwischen dem Axial-Schrägnadellager (8) und einem Zahnkranz (6) ein Distanzring (10) und zwischen dem anderen Axial-Schrägnadellager (9) und der Tretkurbel (5) ein Gewindering (11) angeordnet ist, der mit einem Innengewinde (11.2) auf einem Außengewinde (3.1) der Tretlagerachse (3) festlegbar ist.
